# EUROPEAN PATENT APPLICATION

(11) **EP 2 280 530 A1**
(43) Date of publication of application: **02.02.2011**
(21) Application number: 09014966.7
(22) Date of filing: 02.12.2009
(51) Int. Cl.: H04M 1/725

(54) **Portable terminal for explaining information of wine and control method thereof**

(30) Priority: 09.07.2009 KR 20090062747
(71) Applicant: LG ELECTRONICS INC., Yeongdeungpo-gu Seoul 150-721 (KR)
(72) Inventor: Ahn, Sung Joon, Seocho-gu, Seoul 137-724 (KR)
(74) Representative: Beyer, Andreas

(57) **Abstract**

The present invention relates to a portable terminal for explaining information of wine and a control method thereof.

With the portable terminal for explaining information of wine and the control method thereof according to the embodiments of the present invention, detailed information of wine can be obtained by simply capturing the images of wine that the user wishes to know, such that the user can accurately choose the desired wine.

## Description

### FIELD OF THE INVENTION

The present invention relates to a portable terminal, and more particularly, to a portable terminal for explaining information of wine and a control method thereof.

### DISCUSSION OF THE RELATED ART

A portable terminal is a device which may be configured to perform various functions. Examples of such functions include data and voice communications, capturing images and video via a camera, recording audio, playing music files via a speaker system, displaying images and video on a display, and the like. Some terminals include additional functionality which supports game playing, while other terminals are configured as multimedia players. More recently, portable terminals have been configured to receive broadcast and multicast signals which permit viewing of contents such as videos and television programs.

Also, efforts are ongoing to support and increase the functionality of portable terminals. Such efforts include software and hardware improvements, as well as changes and improvements in the structural components which form the portable terminal.

In the context of this application, wine means liquor made from fruits in a broad sense. In particular, wine means fermented liquor made by fermenting grape.

The wine may be sorted into Sparkling Wine and Non-Sparkling Wine according to the presence and absence of carbonic acid gas, Fortified Wine and Unfortified Wine according to the addition of alcohol or not, and Red Wine, White Wine, Rose Wine, Yellow Wine according to color. In addition to these sorting methods, the wine may be variously sorted according to meal usage, taste, ripening period, etc.

The taste and perfume of the wine are very various according to a producer, a producing district, a raw material, a soil condition, production years, vintage of grape, and sugar content.

In recent, as an interest in well-being increases the consumption of wine is rapidly increasing. In particular, various distribution networks, such as, a discount store, a department store, etc., for distributing wine are prepared and price of wine is also reasonable, such that the wine is being rapidly popularized.

However, general purchasers have little information on each wine and do not know if each wine has what taste and perfume. In addition, since a wine label describes only restricted information, it is difficult to expect if a specific wine is to purchaser's taste.

### SUMMARY OF THE INVENTION

Embodiments of the present invention propose to solve the above problems. It is an object of the present invention to provide a portable terminal which enables a purchaser to easily obtain information of wine using the portable terminal and a control method thereof.

In order to achieve the above object, there is provided a portable terminal for explaining information of wine according to an embodiment of the present invention, including: a display unit that displays images; a sound output module; a camera that captures images; a storage unit that stores the information of wine; and a control unit that extracts identification information from wine images captured by the camera, reads data corresponding to the extracted identification information from the storage unit, and output the data to any one of the display unit and the sound output module.

In another aspect, there is provided a control method of a portable terminal for explaining information of wine according to an embodiment of the present invention, including: extracting identification information from wine images; reading data corresponding to the extracted identification information from a wine database; and outputting the read data through an output module.

In yet another aspect, there is provided a control method for explaining information of wine according to an embodiment of the present invention, including: receiving first wine information; capturing wine images; extracting identification information from the wine images; reading second wine information from a wine database that is included in any one of a memory in the terminal, a detachable external memory detachable to the terminal, and a memory in an external terminal; and outputting comparison results of the first wine information and the second wine information through at least one of a display unit and a sound output module.

With the portable terminal for explaining information of wine and the control method thereof according to the above-mentioned embodiments of the present invention, the portable terminal can obtain detailed information of wine only by capturing the images of wine that the user wishes to know, such that the user can accurately choose the desired wine.

In addition, the present invention increases the understanding of the purchaser on wine, making it possible to increase the consumption of wine.

Moreover, the present invention can determine whether wine suits the user's taste by comparing the user's taste with the detailed information of wine, making it possible to increase the user satisfaction.

Further, the present invention can separately store and manage the detailed information of wine in the external memory, making it possible to maximize the convenience of users.

### BRIEF DESCRIPTION OF THE DRAWINGS

The above and other aspects, features, and advantages of the present invention will become more apparent upon consideration of the following description of preferred embodiments, taken in conjunction with the accompanying drawing figures.
- FIG. 1: is a block diagram of a portable terminal for explaining information of wine according to a first embodiment of the present invention.
- FIG. 2: is a block diagram of a wireless communication system in which the portable terminal for explaining information of wine according to a first embodiment of the present invention can be operated.
- FIG. 3: is a flowchart showing a control method of the portable terminal for explaining information of wine according to a first embodiment of the present invention.
- FIG. 4: is a diagram showing an example of images displayed on a display unit of the portable terminal according to a process of FIG. 3.
- FIG. 5: is a flowchart showing a control method of a portable terminal for explaining information of wine according to a second embodiment of the present invention.
- FIG. 6: is a diagram showing an example of images displayed on a display unit of the portable terminal according to a process of FIG. 5.

### DETAILED DESCRIPTION OF PREFERRED EMBODIMENTS

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

Hereinafter, a portable terminal according to embodiments of the present invention will be described in more detail with reference to the accompanying drawings.

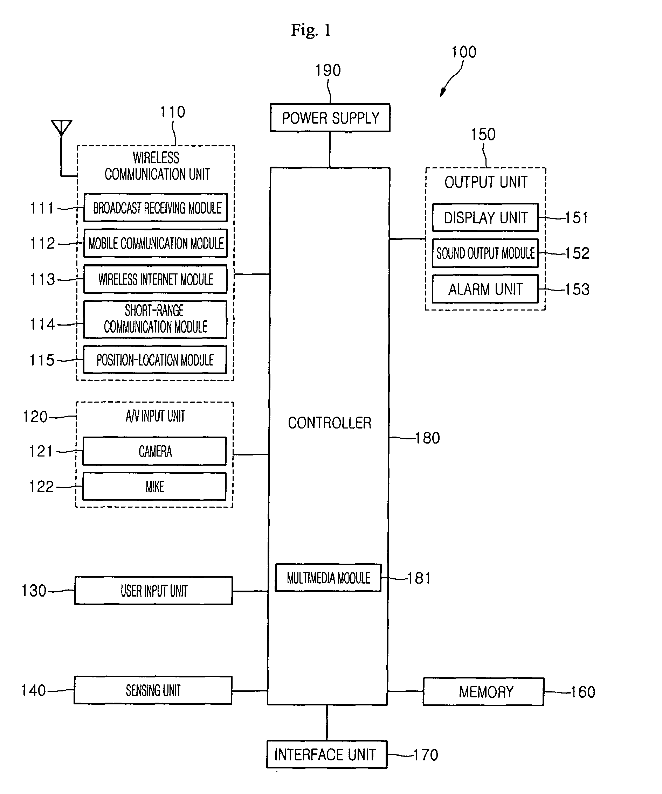

FIG. 1 is a block diagram of a portable terminal for explaining information of wine according to a first embodiment of the present invention.

A portable terminal can be implemented in various forms. For example, the portable terminal described in the specification may be any one of portable terminals such as a cellular phone, a smart phone, a notebook computer, a digital broadcasting terminal, a personal digital assistance (PDA), a portable multimedia player (PMP), a navigation device, etc.

Referring to FIG. 1, a portable terminal 100 according to a first embodiment of the present invention may have various components.

In detail, the portable terminal 100 may include a wireless communication unit 110, an audio/video (A/V) input unit 120, a user input unit 130, a sensing unit 140, an output unit 150, a memory 160, an interface unit 170, a control unit 180, a power supply 190, etc. However, all the components shown are not essential components. The portable terminal may be implemented using more or less components than shown.

The wireless communication unit 110 typically includes one or more components which permits wireless communication between the mobile terminal 100 and a wireless communication system or the mobile terminal 100 and a network within which the mobile terminal is located. For example, the wireless communication unit 110 may include a broadcast receiving module 111, a mobile communication module 112, a wireless Internet module 113, a short-range communication module 114, a position-location module 115, etc.

The broadcast receiving module 111 receives a broadcast signal and/or broadcast associated information from an external broadcast managing server via a broadcast channel. The broadcast channel may include a satellite channel, a terrestrial channel, etc. The broadcast managing server may refer to a server that generates and transmits the broadcast signals and/or the broadcast related information or a server that receives the previously generated broadcast signals and/or the broadcast related information and transmits them to the terminal. The broadcast related information may mean a broadcast channel, a broadcasting program, or information related to a broadcast service provider. The broadcast signals include TV broadcast signals, radio broadcast signals, and data broadcast signals as well as broadcast signals in a form that the data broadcast signals are combined with the TV broadcast signals or the radio broadcast signals. Meanwhile, the broadcast related information may be provided through the mobile communication network. In this case, the broadcast related information may be received by the mobile communication module 112.

The broadcast related information may exist in various forms. For example, the broadcast related information may exist in a form of an Electronic Program Guide (EPG) of Digital Multimedia Broadcasting (DMB), an Electronic Service Guide (ESG) of Digital Video Broadcast-Handheld (DVB-H), etc.

The broadcast receiving module 111 can receive the broadcast signals using various broadcasting systems and in particular, receive the broadcast signals using digital broadcasting systems such as Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T), etc. Of course, the broadcast receiving module 111 is configured to be suitable for the digital broadcasting system as well as all the broadcasting systems that provide the broadcast signals.

The broadcast signals and/or the broadcast related information, which are received through the broadcast receiving module 111, may be stored in a memory 160.

In addition, the mobile communication module 112 transmits and receives the wireless signals with at least one of a base station, an external terminal, and a server on the mobile communication network. Herein, the wireless signal may include data in various forms according to the transmission and reception of a voice calling signal, a video communication calling signal, or a character/multimedia message.

The wireless Internet module 113, which is a module for wireless Internet connection, may be installed inside or outside the portable terminal 100.

The short-range communication module 114 means a module for communication at a relatively closer distance. As the short-range communication technology, a Bluetooth, a Radio Frequency Identification (RFID), an infrared Data Association (IrDA), an Ultra Wideband (UWB), a ZigBee, etc., can be used.

In addition, the position information module 115 is a module to confirm or obtain the position of the mobile terminal 100. As an example, a Global Position System (GPS) module can be used. In detail, the GPS module receives positional information from a plurality of artificial satellites. Herein, the positional information may include coordinate information that is represented by latitude and longitude. In more detail, the GPS module can measure the accurate time and distance from more than three satellites and accurately calculate the current position by a triangular method using three measured distances. In addition, a method of obtaining distance and time information from three satellites and correcting errors using information obtained from one satellite may be also used. In particular, the GPS-module can obtain latitude, longitude, and altitude as well as three-dimensional speed information and accurate time from the location information received from the satellite.

Meanwhile, the audio/video (A/V) input unit 120 is to input an audio signal or a video signal and may include a camera 121, a mike 122, etc. The camera 121 can be operated in an image communication mode or a capturing mode and processes an image frame such as a still image or a moving picture, etc., obtained by an image sensor. The processed image frame may be displayed on the display unit 151 to be described below.

The image frame processed in the camera 121 may be stored in the memory 160 or transmitted to the outside through the wireless communication unit 110. The camera 121 may be provided in two or more according to a configuration aspect of the terminal.

The mike 122 receives the external sound signals by a microphone in a communication mode, a recording mode, a voice recognition mode, etc., and processes the received external sound signals as electrical voice data. When the processed voice data are a communication mode, they can be converted and output in a form transmittable to a mobile communication base station through the mobile communication module 112. The mike 122 may be provided various noise removing algorithms so as to remove noise occurring in a process of receiving the external sound signals.

The user input unit 130 is a component that receives data for controlling the operation of the portable terminal 100 from the user. The user input unit 130 may be configured as a key pad, a dome switch, a touch pad (constant pressure/constant electricity), a jog wheel, a jog switch, etc. In particular, when the touch pad forms a mutual layer structure with the display unit 151 to be described below, this may be referred to as a touch screen.

The sensing unit 140 senses a current state of the portable terminal 100, such as an open and close state of the portable terminal 100, a location of the portable terminal 100, the existence and nonexistence of a user contact, a direction of the portable terminal 100, acceleration/deceleration of the portable terminal 100, etc., to generate sensing signals for controlling the operation of the portable terminal 100. For example, when the portable terminal 100 is a slide phone type, the sensing unit can sense the open and close of the slide phone. In addition, the sensing unit performs a function of sensing the supply of power or not from the power supply 190, the coupling of the external devices or not of the interface unit 170, etc.

The interface unit 170 performs a role of interfacing all the external devices that can be connected to the portable terminal 100. For example, the interface unit may include a wired/wireless headset port, an external charger port, a wired/wireless data port, a memory card port, a port connecting devices including an identification module, an audio input/output (I/O) port, a video input/output (I/O) port, an earphone port, etc.

Herein, the identification module is a chip that stores various information for identifying the use authority of the portable terminal 100. The identification module may include a User Identify Module ('UIM'), a Subscriber Identify Module ('SIM'), an Universal Subscriber Identity Module ('USIM'), etc. Moreover, the device (hereinafter, referred to as 'identification device') including the identification module may be provided in a smart card type. In this case, the identification device can be connected to the portable mobile 100 through the port. Such an interface unit 170 receives data or power from the external devices and transmits it to each component inside the portable terminal 100 or data inside the portable terminal 100 to the external devices.

The output unit 150 is to output an audio signal, a video signal, or an alarm signal. The output unit 150 may include the display unit 151, a sound output module 152, an alarm unit 153, etc.

The display unit 151 displays and outputs information processed in the portable terminal 100. For example, when the portable terminal 100 is a communication mode, the display unit 151 may display a User Interface (UI) or a Graphic User Interface (GUI), which is associated with communication and when the portable terminal 100 is an image communication mode or a capturing mode, the display unit 151 can display the captured and/or received images or the UI and GUI.

Meanwhile, as described above, when the display unit 151 and the touch pad form the mutual layer structure so as to form the touch screen, the display unit 151 may be used as an input device in addition to the output device. The display unit 151 may include any one of a liquid crystal display, a thin film transistor-liquid crystal display, an organic light-emitting diode, a flexible display, and a 3D display. There may be more than two display units 151 according to the implementation type of the portable terminal 100. For example, the portable terminal 100 may include both an external display unit (not shown) and an internal display unit (not shown).

The sound output module 152 outputs audio data that are received from the wireless communication unit 100 or stored in the memory 160, in call signal reception, a communication mode, or a recording mode, a voice recognition mode, a broadcast receiving mode, etc. In addition, the sound output module 152 outputs the sound signal associated with the functions (for example, call signal receiving sound, message receiving sound, etc.) performed in the portable terminal 100. The sound output module 152 may include a speaker, a buzzer, etc.

The alarm unit 153 outputs a signal to notify an event generation of the portable terminal 100. An example of the events generated from the portable terminal 100 may include the call signal reception, the message reception, the key signal input, etc. The alarm unit 153 can output the event generation signal in forms other than the audio signal or the video signal. For example, the alarm unit 153 can also output signals in a vibration form. In detail, when a calling signal is received or a message is received, the alarm unit 153 can output vibration so as to notify this. Further, when a key signal is input, the alarm unit 153 can output vibration as a feedback for the input of the key signal. The user can recognize the event generation through the above-mentioned vibration output. Of course, the signal to notify the event generation can be output through the display unit 151 or the sound output module 152.

The memory 160 can be stored with programs for the processing and control of the controller 180 and can perform a function of storing and temporarily storing the input and output data (for example, phone book, message, still pictures, moving pictures, etc.).

The memory 160 may include at least one type of storage medium of a flash memory type, a hard disk type, a multimedia card micro type, a card type memory (for example, SD or XD memory, etc.), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. In addition, the portable terminal 100 can operate a web storage that performs a storage function of the memory 160 on an internet.

The controller can control the overall operations of the portable terminal 100. For example, the controller 180 performs the control and processing associated with voice calls, data communications, video calls, etc. Moreover, the controller 180 may include a multimedia module 181 which provides multimedia playback. The multimedia module 181 may be configured part of the controller 180 or this module may be implemented as a separate component from the controller 180.

The power supply 190 receives internal power and external power by the control of the controller 180 and supplies power required for the operations of each component.

Various embodiments described herein may be implemented in a computer-readable recording medium using, for example, computer software, hardware, or a combination thereof.

For a hardware implementation, the embodiments described herein may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and other electronic units designed to perform the functions described herein. In some cases, the embodiments can be executed by the controller 180.

For a software implementation, the embodiments of processes, functions, etc., described herein may be implemented with separate software modules that perform at least one function and operation. The software codes can be implemented with a software application written in any suitable programming language. In addition, the software codes may be stored in the memory 160 and executed by the controller 180.

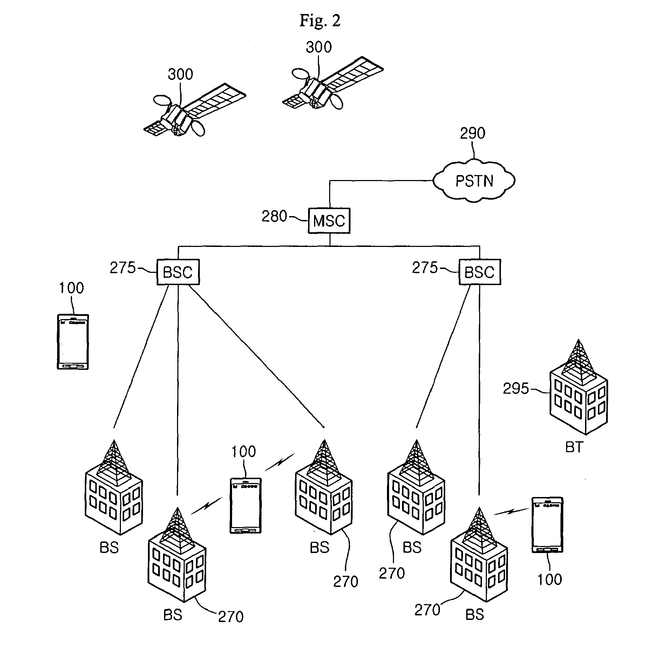

Hereinafter, a communication system in which the portable terminal 100 according to the first embodiment of the present invention can be operated will be described with reference to FIG. 2.

The communication systems can use different air interfaces and/or physical layers. Examples of such air interfaces utilized by the communication systems include frequency division multiple access (FDMA), time division multiple access (TDMA), code division multiple access (CDMA), and universal mobile telecommunications system (UMTS) (in particular, long term evolution (LTE)), and the global system for mobile communications (GSM), etc. Hereinafter, only the CDMA will be described for convenience of explanation. However, such teachings can apply equally to all the communication systems including the CDMA wireless communication system.

FIG. 2 is a block diagram of a wireless communication system in which the portable terminal for explaining information of wine according to a first embodiment of the present invention can be operated.

Referring to FIG. 2, the CDMA wireless communication system may include a plurality of portable terminals 100, a plurality of base stations (BSs) 270, base station controllers (BSCs), and a mobile switching center (MSC) 280. The MSC 280 is configured to connect to a conventional public switch telephone network (PSTN) 290 and the MSC 280 is also configured to connect to the BSCs 275. The BSCs 275 may be connected to the BSs 270 via backhaul lines. The backhaul lines may be configured in accordance with any one of E1/T1, ATM, IP, PPP, Frame Relay, HDSL, ADSL, and xDSL. It is to be understood that the system shown in FIG. 2 may include the plurality of BSCs 275.

Each base station 270 may include one or more sectors, each sector having an omnidirectional antenna or an antenna pointed in a particular direction radially away from the base station 270. Alternatively, each sector may include various types of more than two antennas. Each base station 270 may be configured to support a plurality of frequency assignments, with each frequency assignment having a particular spectrum (e.g., 1.25 MHz, 5 MHz, etc.).

The intersection of a sector and frequency assignment may be referred to as a CDMA channel. The base stations 270 may also be referred to as base station transceiver subsystems (BTSs). In this case, the term "base station" may be collectively referred to a combination of the BSC 275, and one or more base stations 270. The base stations may also be referred to as "cell sites". Alternatively, each of the plurality of sectors of a particular base station 270 may be referred to as a plurality of cell sites.

As shown in FIG. 2, a broadcasting transmitter (BT) 295 transmits broadcast signals to the portable terminals 100 that are operated within the system. The broadcast receiving module 111 shown in FIG. 1 may be included in the portable terminal 100 so as to receive the broadcast signals transmitted from the BT 295.

Further, FIG. 2 shows several global positioning system (GPS) satellites 300. Such satellites 300 facilitate locating the location of at least one of the plurality of portable terminals 100. Although two satellites are depicted in FIG. 2, it is understood that useful positioning information may be obtained by more or less than two satellites. The position-location module 115 shown in FIG. 1 is typically configured to cooperate with the satellites 300 to obtain desired location information. The locations can be tracked using all the technologies capable of tracking locations in addition to the GPS tracking technology. In addition, at least one of the GPS satellites 300 may selectively or additionally be configured to perform satellite DMB transmissions.

During typical operation of the wireless communication system, the base stations 270 receive reverse-link signals from various portable terminals 100. At this time, the portable terminals 100 are engaging in calls, messaging, and other communications. Each reverse-link signal received by a particular base station 270 is processed by the particular base station 270. The data generated by the processing results are transmitted to the associated BSC 275 and the BSC 275 provides call resource allocation and mobility management function, etc., including the orchestration of soft handoffs between base stations 270. In addition, the BSCs 275 also transmits the received data to the MSC 280, which provides additional transmission services for interfacing with the PSTN 290. Similarly, the PSTN connects to the MSC 280, and the MSC connects to the BSCs 275, which in turn control the base stations 270 to transmit forward-link signals to the portable terminals 100.

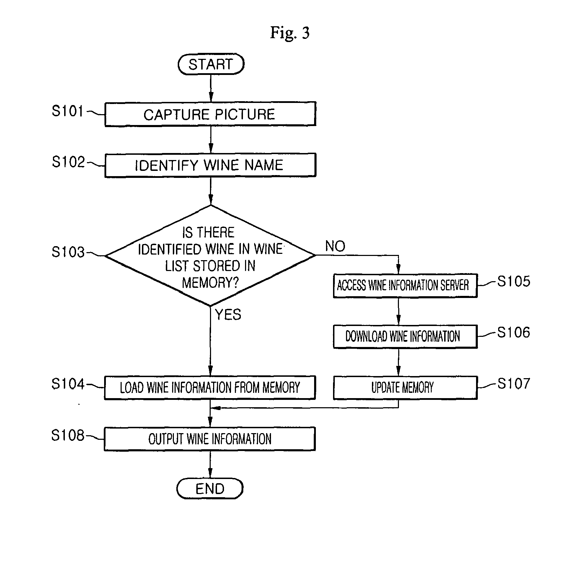

FIG. 3 is a flowchart showing a control method of the portable terminal for explaining information of wine according to the first embodiment of the present invention.

Referring to FIG. 3, the user of the portable terminal 100 captures a specific wine that the purchaser wishes to know by using the camera 121. The user captures the image of the wine to include a label on which identification information, such as name, character, picture, etc., which can identify the wine, is marked.

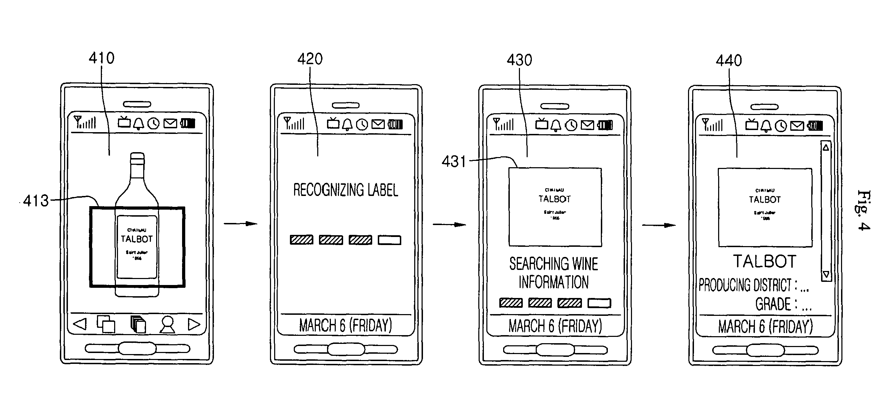

The camera 121 can be operated in a wine capturing mode, such that the user can easily capture the wine image including the label, etc. In the wine capturing mode, in order to easily recognize the identification information from the wine image, a guide box 413 (FIG. 4) which guides the label, etc., to be located within a specific area, may be displayed.

At this time, the camera 121 may be operated in a picture capturing mode in which the wine capturing mode is implemented and may be operated in a moving picture capturing mode. When the camera 121 is operated in the moving picture capturing mode, the controller 180 selects at least one of a plurality of frames forming the moving picture and uses it as an image for recognizing the wine. Alternatively, the wine capturing mode may be selectively provided together with the picture capturing mode and the moving picture capturing mode. For example, the user operates the UI of the portable terminal 100 to activate menus associated with the camera 121 including at least one of the wine capturing mode, the picture capturing mode, and the moving picture photographing mode. Among others, the wine capturing mode may be selected.

Moreover, the image captured by the camera 121 as well as the image previously stored in the detachable external memory (not shown) to the memory 160 and the portable terminal 100 can be used. The external memory may be one of the above-mentioned data storage units that can cooperate with the interface unit 170.

The controller 180 recognizes the identification information from the wine image (S102). The identification information may include at least any one of some or all of the character trademarks and the picture trademarks that are marked on the label.

The recognition of the identification information may be performed by the controller 180 and may be performed using an image analysis algorithm included in the portable terminal 100. The image analysis algorithm can recognize characters, symbols, etc., from the wine image and can convert them into predetermined text data or image data form. For example, the image analysis algorithm can extract the text data corresponding to the wine name, which is referred to "ABC", from the wine image.

The image analysis algorithm can be stored in the memory 160 or the external memory. In particular, when the image analysis algorithm is stored in the external memory, the controller 180 loads the image analysis algorithm stored in the external memory to perform the analysis of the wine image.

In addition, the identification information extracted from the wine image, which is temporarily stored in the memory 160, can be utilized.

The controller 180 compares the identification information of the wine identified in step S102 with a wine list that is stored in a wine database (DB) stored in the memory 160 (S103).

At least one table in which information corresponding to types of identification information (character trademark, picture trademark, etc.) is stored as a unique ID value may be included in the wine DB. In other words, one ID value may be allocated to one wine.

Further, the information associated with the wine, such as wine name, wine label image, kind of wine, producer, import source, producing district, producing country, drinking temperature, drinking method, grape specie, taste, flavor, suiting foods, history of wine, etc., may be stored in the wine DB. The above-mentioned wine information can be stored as the text data as well as the image data and/or the sound data. When the wine information is stored as the image data, the image data together with the text data may be displayed on the display unit 151. When the wine information is stored as the sound data, the sound data can be output by the sound output module 152.

Herein, the display unit 151 and the sound output module 152 may be referred to output modules.

In addition, the wine DB may be included in the external memory. In this case, since the external memory can store data having relatively larger capacity as compared to the memory 160, it can store various wine information.

In addition, the wine DB may be included in the memory that is provided in the external terminal (not shown). In this case, the portable terminal 100 can be connected to the external terminal using the wireless communication unit 110. For example, the mobile terminal 100 may be connected to the external terminal using the short-range communication module 114 such as Bluetooth, RFID, infrared communication, UWB, ZigBee, etc. and may use the wine DB stored in the memory in the external terminal.

Moreover, the wine DB is provided to the predetermined web server and the portable terminal 100 accesses the web server through Internet to read the wine information. Herein, the memory 160, the external memory, and the memory in the external terminal, which are components for storing data, may be referred to as a storage unit. In other words, the wine DB may be provided in the storage unit.

When there are data corresponding to the identification information in the wine DB, the controller 180 reads the wine information corresponding to the identification information from the wine DB (S104).

The wine information read from the wine DB is output by the display unit 151 and/or the sound output module 152 (S108).

Meanwhile, if there are no data corresponding to the identification information in the wine DB, the controller 180 can access the predetermined wine information server (not shown) using the wireless communication unit 110 (S105). The wine information server may be provided in a web server form and may be a server that is connected to a social network site (SNS), a blog, a micro blog, or an instant messenger, etc., to store contents uploaded by the user in the site, etc.

The wine DB including the wine information, which is not stored in the wine DB, may be provided in the wine information server. In other words, the wine DB of the wine information server includes more data than the wine DB of the storage unit. The wine DB of the wine information server may include the table that uses the same information as the wine DB of the storage unit as the unique ID value.

The controller 180 transmits the identification information data to the wine information server via the wireless communication unit 110 and the wine information server searches the wine information corresponding to the received identification information and transmits the searched wine information to the wireless communication unit 110 (S106). That is, the controller 180 receives the wine information downloaded from the wine information server.

The controller 180 stores the wine information downloaded from the wine information server in the storage unit (S107) and outputs the wine information using the display unit 151 and/or the sound output module 152 (S108).

At this time, when there is no wine information corresponding to the identification information in the wine information server, the wine information server can transmit error messages to the portable terminal 100 and the portable terminal 100 can output messages notifying the wine information search failure.

In addition, similar to one that the controller 180 accesses the wine information server to read the wine information, the controller 180 may read the data corresponding to the extracted identification information from the external memory in which the wine DB is stored or the memory in the external terminal. For example, the controller 180 can be connected to the external terminal using the short-range communication module 114 and can read the data of the wine DB stored in the memory.

Moreover, the wine DB may be periodically or non-periodically updated. For example, the controller 180 periodically accesses the wine information server, etc., to receive the wine information having the difference between the wine information that is not included in the existing wine DB or the wine information that is included in the existing wine DB, making it possible to update the wine DB. The update may be implemented to be periodically performed and may be implemented to be performed when the user uses the wine description function according to the present embodiment, that is, to be non-periodically performed.

In addition, the wine DB may be directly updated by the user. In detail, the user may store new wine information in the wine DB using the user input unit 100. For example, when there is no wine information corresponding to the identification information in the wine DB, the controller 180 can access the wine information server, etc., from the user to display menus for selecting whether or not update the wine information or directly input the wine information on the display unit 151. Herein, the user can select the menu that directly inputs the wine information to input the new wine information in the wine DB.

With the portable terminal 100 as described above, the detailed information of the wine can be accurately obtained only by taking the label of the specific wine by the camera 121, making it possible to accurately choose the purchaser desired wine.

In addition, the popularization of wine can get help by increasing the understanding of the purchaser of wine.

Further, when the wine DB is provided in the external memory, the external memory can be separately stored and managed, making it possible to maximize the user convenience.

Hereinafter, one example of the process for explaining the wine information of the portable terminal according to the first embodiment of the present invention will be described in detail with reference to FIG. 4.

FIG. 4 is a diagram showing an example of images displayed on the display unit of the portable terminal according to a process of FIG. 3.

FIG. 4 shows a wine capturing mode screen 410, a wine identification screen 420, a wine information search screen 430, and a wine information screen 440. The screens 410, 420, 430, and 440 are illustrated by way of example only and therefore, are not limited thereto. As a result, the screens can be variously changed, deleted, added within the scope of the present invention.

The user takes the image of the wine using the wine capturing mode (410, S101). In order to more accurately recognize the identification information of the wine, the guide box 413, which guides the label of the wine to be located within a specific location can be displayed on the wine capturing mode screen 410. The user can take images by controlling the angle of the camera 121 so that the label of the wine can be located inside the guide box 413.

If the image of the wine is taken by the camera 121, the controller 180 extracts the identification information of the wine from the wine image (S102) and displays the wine identification screen 420 through the display unit 151. The wine identification screen 420 can be selectively provided. In addition, the controller 180 can convert the wine capturing mode screen 410 to the wine information search screen 430 without providing the wine identification screen 420. In this case, step S102 can be performed while the wine information search screen 430 is displayed.

When the extraction process of the identification information completes, the controller 180 can display the wine information search screen 430, which notifies that the wine information is searching, together with the extracted identification information data 431, on the display unit 151. At the same time, the controller 180 searches if there is the wine information corresponding to the extracted identification information in the wine DB of the storage unit (S103). If so, steps subsequent to step 104 are performed. If not, steps subsequent to step S105 are performed.

The controller 180 outputs the wine information read from the wine DB through the display unit 151 or the sound output module 152 (440, step S108).

The user can obtain the detailed information of his/her desired wine through the above-mentioned steps.

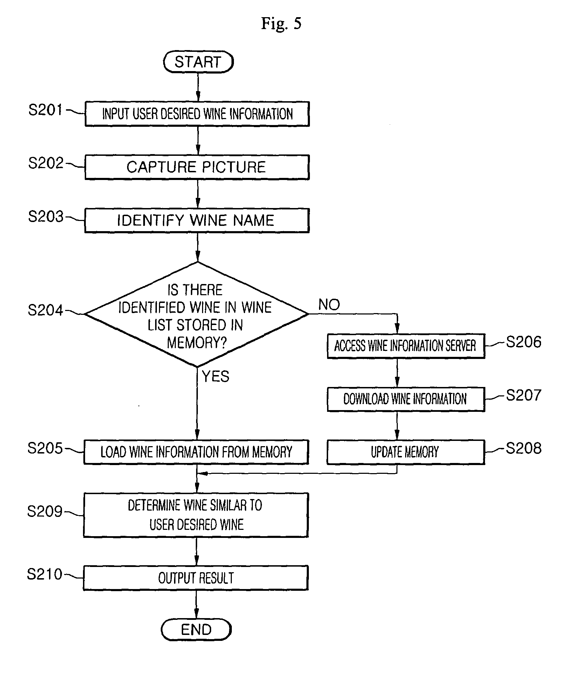

Hereinafter, a portable terminal for explaining information of wine according to a second embodiment of the present invention and a control method thereof will be described with reference to FIG. 5.

FIG. 5 is a flowchart showing a control method of a portable terminal for explaining information of wine according to a second embodiment of the present invention.

With the portable terminal for explaining information of wine according to the second embodiment of the present invention, it can purchase the user's desired wine when the user purchases wine.

In detail, the user inputs the wine information (first wine information) to be purchased by using the user input unit 130 (S201). At this time, the wine information input by the user may be any one of the various kinds of wine information (wine name, kind of wine, producer, import source, producing district, producing country, drinking temperature, drinking method, grape specie, taste, flavor, suiting foods, etc.), which are stored in the wine DB. The controller 180 reads the kinds of wine information that are stored in the wine DB and displays them on the display unit 151, such that the user can conveniently input the wine information to be purchased. The kinds of wine information, which are stored in the wine DB, can be previously stored in the memory 160.

In addition, the plurality of first wine information can be previously established in the memory 160 or the external memory and can be provided so that the user can select the previously established wine information.

Further, the wine information input from the user to be purchased can be utilized by being temporarily stored in the memory 160.

The controller 180 performs a picture capturing step (S202), a wine name identification step (S203) similar to step S107, a wine name search step (S204), a wine information loading step (S205), a server access step (S206), a wine information download step (S207), a memory update step (S208), which are similar to steps S101 to S107. Steps S202 to S208 may be implemented in the same steps as the first embodiment and therefore, the detailed description thereof will be omitted.

Through the above steps, after the user obtains the captured wine information (second wine information) as images, the controller 180 compares the first wine information with the second wine information (S209). In detail, the controller 180 compares the first and second wine information using the previously established wine comparison algorithm and determines whether the wine captured by the user matches the wine information to be purchased (S209). The wine comparison algorithm can be implemented to determine whether the first wine information completely matches the second wine information as well as to determine similarity between the input information. For example, when the user inputs the purchase of the wine manufactured by a grape of A specie, if the wine information of the captured image is manufactured by a grape of B specie similar to the A specie, the wine comparison algorithm can be implemented to indicate the similarity between the A specie and the B specie.

The controller 180 can output the determination results at step S209 through the display unit 151 and/or the sound output module 152.

With the portable terminal for explaining information of wine according to the second embodiment of the present invention, it can compare the user's taste and the detailed information of wine to determine whether the wine suits the user's taste, thereby increasing the user satisfaction.

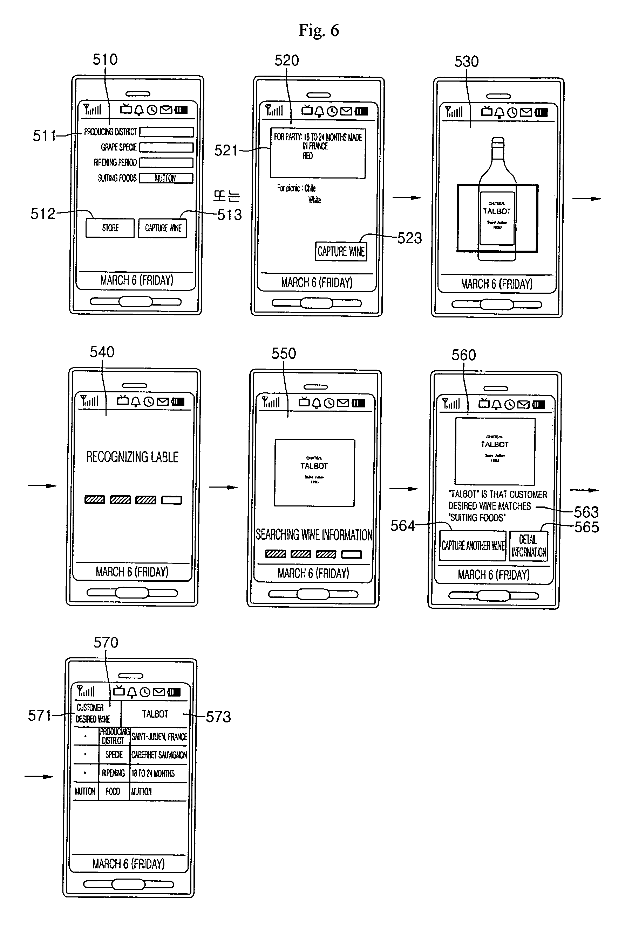

Hereinafter, one example of the process for explaining the wine information of the portable terminal according to the first embodiment of the present invention will be described in detail with reference to FIG. 6.

FIG. 6 is a diagram showing an example of images displayed on a display unit of the portable terminal according to a process of FIG. 5.

FIG. 6 shows a wine information input screen 510 that inputs wine information to be purchased by the user, a wine kind select screen 520 that can select the kind of wine to be purchased by the user, a wine capturing mode screen 530 that corresponds to the wine capturing mode screen 410, a wine identification screen 540 that corresponds to the wine identification screen 420, a wine information search screen 550 that corresponds to the wine information search screen 430, a comparison result screen 560 that displays the comparison result of the first wine information and the second information, and a detail comparison screen 570 that can compare the first wine information and the second wine information while viewing the above information. The screens 510, 520, 530, and 540 are illustrated by way of example only and therefore, are not limited thereto. As a result, the screens can be variously changed, deleted, added within the scope of the present invention.

The user inputs the first wine information using the user input unit 130 (510, step S201). The embodiment will describe, for example, the case where the user inputs mutton as food suiting wine.

The wine information input screen 510 may be configured to input at least one of the kinds of wine information that is stored in the wine DB. To this end, the controller 180 reads the kinds of wine information from the wine DB or the memory 160 to configure the wine information input screen 510.

Meanwhile, the wine information input screen 510 can be provided with a storage button 512 that can store the user desired purchase information in the storage unit and a wine capturing button 513 that after the input of the first wine information completes, converts the wine information input screen 510 into the wine capturing mode screen 530 capturing the wine. When the user selects the storage button 512, the input information is stored in the storage unit, which can be used in the wine kind select screen 520 later.

The wine kind select screen 520 and the wine information input screen 510 can be selectively provided. The wine kind select screen 520 is configured so that the previously established wine kinds are displayed in the memory 160 or the external memory and the user can select at least one of the displayed wines. For example, the kinds of wine may be stored according to the usage of wine. The wine kind select screen 520 may be provided with a wine capturing button 523 that performs the same function as the wine capturing button 513.

In addition, the wine kind select screen 520 may be implemented to show a list of the first wine information stored in the wine information input screen 512 by the user.

When the input of the first wine information completes, the image of the wine to be purchased is captured (530, step S202), the wine of the captured wine is identified (540, step S203), and the wine information is then loaded (550, steps S204 to S208).

The controller 180 compares the first wine information with the second wine information, that is the wine information of the captured image (S209), and outputs the results through the display unit 151 or the sound output module 152 (560, step S210).

The wine information of the captured image can be schematically displayed on the comparison result screen 560 and the comparison result 563 of the first wine information and the second wine information is displayed thereon. The comparison result may include the matching or not as well as the similarity between the first and second information.

When the comparison results do not match each other, the comparison result screen 560 may be provided with another wine capturing button 564 that enables the user to conveniently capture other wines and a detail example button 565 that can review in detail the comparison results.

When the user selects the detail example button 565, the controller 180 converts the comparison result screen 560 to a detail comparison screen 570. An area in which the first wine information is displayed and an area 573 in which the second wine information is displayed are simultaneously displayed on the detail comparison screen 570, such that the user can conveniently compare the first and second wine information.

Also, with the one embodiment of the present invention, the above-mentioned method can be implemented as computer-readable codes in media in which programs are recorded. The computer-readable recording media includes all types of recording apparatuses in which data readable by a computer system is stored. Examples of the computer-readable recording media include a ROM, a RAM, a CD-ROM, a magnetic tape, a floppy disk, an optical data storage, etc., and in addition, include a recording medium implemented in the form of a carrier wave (for example, transmission through the Internet). In addition, the computer may include the controller 180 of the portable terminal 100.

Further, the wine DB stored in the memory 160 or the external memory can be provided to be accessed by the user even though the images are not captured. To this end, the controller 180 may include separate UI and algorithm that search and modify the contents of the wine DB. In detail, the controller 180 may display the wine list stored in the wine DB on the display unit 151 according to the selection of the user or the search conditions. When the user selects the wine to be updated in the displayed wine list, the controller 180 displays the wine information corresponding to the selected wine on the display unit 151 and uses the user input unit 130 to enable the user to modify or delete the displayed wine information. In addition, the wine information having the new identification information can be stored in the wine DB by using a method similar to the above-mentioned method.

Meanwhile, the wine DB stored in the memory 160 may be uploaded in the wine information server, a social network site, a blog, a micro blog, or an instant messenger, etc., according to the selection of the user. The wine DB uploaded by the user may be stored in the memory, which is provided in the wine information server, etc., together with the identification code capable of identifying the user performing the uploading. The wine information server, and the like can provide the list of the uploaded wine DB to any user accessing the wine information server, etc., and the user selects the wine DB to be downloaded in the list, making it possible to download the data stored in the corresponding wine DB.

In addition, the wine DB stored in the memory 160 may be transmitted to the external terminal by the wireless communication unit 110 according to the selection of the user. For example, the mobile terminal 100 may be connected to the external terminal using the short-range communication module 114 such as Bluetooth, RFID, infrared communication, UWB, ZigBee, etc., and may transmit the wine DB data receiving instructions and the data stored in the wine DB to the external terminal. The external terminal can receive the wine DB data stored in the memory 160 according to the instructions received from the portable terminal 100 and store them in the memory in the external terminal.

The portable terminal for explaining information of wine and the control method thereof described above are not limited to the configuration and method of the embodiments as described above, but the embodiments may be configured by selectively combining all the embodiments or some of the embodiments so that various modifications can be made.

## Claims

1. A portable terminal (100), comprising:
- a display unit (151) that displays images;
- a sound output module (152);
- a camera (121) adapted to capture images;
- a storage unit ; and
- a control unit (180)
**characterized in that**
- the storage unit stores information on wine, and **in that**
- the control unit (180) extracts identification information from wine images captured by the camera (121), reads data corresponding to the extracted identification information from the storage unit, and outputs the data to any one of the display unit (151) and the sound output module (152).

2. The portable terminal according to claim 1,
wherein the storage unit is at least one of a memory (160) in the portable terminal, a detachable external memory that is connected to an interface unit of the portable terminal, and a memory in an external terminal.

3. The portable terminal according to claim 1,
wherein the identification information is at least one of characters and pictures marked on a label of wine.

4. The portable terminal according to claim 1,
wherein when there are no data corresponding to the extracted identification information in the storage unit, the controller (180) receives data corresponding to the extracted identification information from a wine information server.

5. The portable terminal according to claim 1,
wherein the wine information stored in the storage unit is periodically updated or is directly added, modified, and deleted by a user.

6. A control method of a portable terminal (100) for explaining information of wine comprising:
- capturing at least one wine image;
- extracting identification information from the wine image;
- reading data corresponding to the extracted identification information from a wine database; and
- outputting the read data through an output module (150).

7. The control method according to claim 6,
wherein the wine database is included in at least one of a memory (160) in the terminal (100), a detachable external memory to the terminal (100), and a memory in an external terminal.

8. The control method according to claim 6,
wherein the output module (150) is at least one of a display unit (151) and a sound output module (152), and the step of reading the data outputs the fact that data corresponding to the extracted identification information is being read to the output module.

9. The control method according to claim 6,
wherein when there are no data corresponding to the extracted identification information in the wine database, the step of reading the data includes receiving data corresponding to the extracted identification information from a wine information server or a memory in an external terminal by wireless communication or a detachable external memory to the portable terminal.

10. The control method according to any one of claims 6 to 9, further comprising storing the received data in the wine database.

11. A control method for explaining information of wine comprising:
- receiving first wine information;
- capturing at least one wine image;
- extracting identification information from the wine image;
- reading second wine information from a wine database that is included in any one of a memory in the terminal, a detachable external memory detachable to the terminal, and a memory in an external terminal; and
- outputting comparison results of the first wine information and the second wine information through at least one of a display unit (151) and a sound output module (152).

12. The control method according to claim 11,
wherein the first wine information includes at least one of wine name, kind of wine, producer, import source, producing district, producing country, drinking temperature, drinking method, grape specie, taste, flavor, and suiting foods, and
the step of receiving the first wine information includes receiving at least one of wine information stored in the wine database.

13. The control method according to claim 11,
wherein the step of outputting outputs comparison results including a similarity between the first wine information and the second wine information.

14. The control method according to claim 11,
wherein the first wine information is information selected from previously stored information in a memory (160) in the terminal, the external memory, and a memory in the external terminal.

15. The control method according to claim 6 or 11,
wherein the wine information stored in the wine database is periodically updated or is directly added, modified, and deleted by a user.
